# EUROPÄISCHE PATENTSCHRIFT

(11) **EP 0 805 743 B1**
(45) Veröffentlichungstag und Bekanntmachung des Hinweises auf die Patenterteilung: **26.04.2000**
(21) Anmeldenummer: 96900590.9
(22) Anmeldetag: 17.01.1996
(51) Int. Cl.: B29C 33/38, F01C 1/08, B29D 31/00

(54) **VERFAHREN ZUR HERSTELLUNG VON ROTOREN VON SCHRAUBENVERDICHTERN**
PROCESS FOR PRODUCING ROTORS FOR WORM COMPRESSORS
PROCEDE DE PRODUCTION DE ROTORS POUR COMPRESSEURS A VIS

(30) Priorität: 26.01.1995 DE 19502323
(43) Veröffentlichungstag der Anmeldung: 12.11.1997
(73) Patentinhaber: Kirsten, Günter, 08451 Crimmitschau (DE)
(72) Erfinder: Kirsten, Günter, 08451 Crimmitschau (DE)
(74) Vertreter: Selting, Günther, Dipl.-Ing.
(86) Internationale Anmeldenummer: EP9600175
(87) Internationale Veröffentlichungsnummer: WO9622870

(56) Entgegenhaltungen:
- DE-A- 1 704 236
- DE-A- 3 448 025
- DE-A- 3 506 475
- DE-A- 3 903 067

## Beschreibung

Die Erfindung betrifft ein Verfahren zur Herstellung von Rotoren von Schraubenverdichtern und damit herstellbare Rotore.

Zur Herstellung von Rotoren eines Schraubenverdichters werden neben spanenden Herstellungsverfahren Urformverfahren angewendet, bei denen der Rotor durch Ausfüllen einer Negativform mit einem geeigneten Rotormaterial hergestellt wird. Als Urformverfahren oder Urformen werden Verfahren bezeichnet, bei denen eine Form erstmalig aus losem Material durch Erzeugung des Materialzusammenhangs geschaffen wird. Als Beispiel für ein Urformverfahren sei das Gießen genannt, bei dem eine Urform mit Material ausgegossen wird. Ein speziell auf die Herstellung von Rotoren abgestimmtes Urformverfahren ist aus der DE 40 35 534 A1 bekannt. Nach diesem Verfahren werden Rotore für Schraubenverdichter aus faserverstärktem Kunststoff dadurch hergestellt, daß faserverstärkte Kunststoffscheiben in einem Formhohlraum einer Negativform übereinandergestapelt und unter Anwendung von Wärme und Druck miteinander verbunden werden. Aus DE-A-35 06 475 und DE-A-39 03 067 sind Verfahren zur Herstellung von Rotoren für Schraubenverdichter bekannt, gemäß derer die Negativform im Spritzgußverfahren oder im drucklosen Gießverfahren mit Kunststoff gefüllt werden.

Auch die Herstellung der Negativform erfolgt durch ein Urformverfahren, bei dem von einem Meisterrotor, der in seiner Form dem herzustellenden Rotor entspricht, dessen Kontur abgenommen wird.

Wegen der zweimaligen Verwendung eines Urformverfahrens wird die Form des in den Schraubenverdichter einzusetzenden Rotors von dem Meisterrotor bestimmt. Der Meisterrotor wird üblicherweise spanend hergestellt. Die bei der Herstellung des Meisterrotors verwendeten Werkzeuge, zum Beispiel Stoß- oder Schleifmaschinen, die die dreidimensional gekrümmten Flächen der Zähne erzeugen, erfordern jedoch Freischnitte für das Zustellen der Werkzeuge. Bei der Bearbeitung der Zahnfußbereiche müssen bisher mit dem Werkzeug in zur Rotorachse konzentrische Zylindermantelflächen Ausrundungen eingearbeitet werden. Die Ausrundungen sind erforderlich, um das die Zahnflanken bearbeitende Werkzeug zustellen zu können.

Wenn ein Rotor mit solchen Ausrundungen mit einem zweiten Rotor in einen Schraubenverdichter eingesetzt werden soll, muß der zweite Rotor an seinen Zahnköpfen Kuppen aufweisen, die beim Kämmen in die Ausrundungen eingreifen. Andererseits kann zwischen den Rotoren eine ausreichende Abdichtung nicht erreicht werden. Die Kuppen des zweiten Rotors vergrößern jedoch dessen Durchmesser und damit den des den zweiten Rotor umschließenden Gehäuseabschnitts. Die Vergrößerung des Durchmessers des Gehäuseabschnitts und die Rundungen der Kuppen verschlechtern das Dichtverhalten im Eingriffsbereich der beiden Rotore. Bevor die Zähne der Rotore während des Abwälzens in dem jeweiligen Schnitt aneinander in Anlage kommen, liegt zwischen ihnen ein sogenanntes Blasloch, durch das verdichtete Gase zur Niederdruckseite zurückströmen.

Die fertigungsbedingte Geometrie der Rotore hat somit Rückstromverluste zur Folge, die bei den bekannten Schraubenverdichtern zu einem niedrigen Wirkungsgrad führen.

Aufgabe der Erfindung ist die Herstellung von Rotoren komplexer Geometrie in einem einfachen Herstellungsverfahren.

Die Lösung dieser Aufgabe erfolgt erfindungsgemäß mit den Merkmalen der Ansprüche 1,4 bzw. 5.

Um einen Schraubenverdichter mit höherem Wirkungsgrad zur Verfügung stellen zu können, ist es erforderlich, die Rotore hinsichtlich ihres Strömungs- und Abdichtverhaltens zu optimieren. Dies kann jedoch nur dann gelingen, wenn die optimierte Geometrie der Rotore auch herstellbar ist. Die Lösung der der Erfindung zugrunde liegenden Aufgabe beruht einerseits auf der Konzeption einer verbesserten Geometrie für die Rotore und andererseits auf der Bereitstellung eines Herstellungsverfahrens, das die Serienproduktion solcher Rotore erlaubt. Das Herstellungsverfahren und die entsprechenden Rotore sind dabei zwei unterschiedliche Ausprägungen des der Erfindung zugrundeliegenden formgestalterischen Konzepts.

Die unter Verwendung einer Urform hergestellten Rotore weisen eine Geometrie auf, die von der Geometrie der Negativform bestimmt wird. Die Geometrie der Negativform wird unmittelbar auf damit hergestellte Rotore abgebildet. Daher ist es möglich, durch Veränderungen der Geometrie der Negativform die Geometrie des späteren Rotors zu bestimmen. Wenn z.B. festgestellt wird, daß ein Rotor ein ungünstiges Strömungsverhalten zeigt, und wenn ferner festgestellt wird, wie die Geometrie des Rotors geändert werden muß, und das Strömungsverhalten zu verbessern, können Veränderungen der Geometrie der Negativform vorgenommen werden, um die Geometrie des Rotors zu optimieren. Durch eine Korrekturbearbeitung der Negativform lassen sich also Rotoren mit einer gegenüber Vorläuferserien Korrekturen aufweisenden Rotorgeometrie herstellen.

Das Strömungs- und Dichtverhalten wird besonders durch die Gestaltung der Zahnfußbereiche der gewundenen Zähne des Hauptläufers bestimmt. In diesem Bereich sollen Zylindermantelflächen angeordnet sein. Der mit Hauptläufer kämmende Nebenläufer soll entsprechend an seinem Zahnkopfbereich Zylindermantelflächen aufweisen. Durch die neue Geometrie des Hauptläufers ist es möglich, einen Nebenläufer mit geringem Durchmesser zu verwenden, der keine Abrundungen an den Zahnköpfen aufweist. Dadurch wird erstens erreicht, daß der den Nebenrotor umschließende Gehäusebereich den Eingriffbereich der beiden Rotore enger abschließen kann und zweitens daß beim Kämmen der beiden Rotore das Blasloch beim Ineingriffkommen der Zähne schneller geschlossen wird. Das von dem Gehäuse und den Rotoren begrenzte Blasloch wird sowohl in zeitlicher als auch in räumlicher Hinsicht durch die neuen Geometrien von Haupt- und Nebenläufer verkleinert. Beides verringert die Rückströmverluste. Durch die Herstellung von Rotoren mit einem Urformverfahren ist es möglich, die komplexen Geometrien mit hoher Präzision und verhältnismäßig geringem Aufwand zu reproduzieren.

Ein weiterer Vorteil besteht in der verbesserten Abdichtung zwischen den Zahnköpfen des Nebenläufers und dem den Nebenläufer umschließenden Gehäuseabschnitt. Die Zylindermantelflächen der Zahnköpfe dichten besser als die abgerundeten Kuppen nach dem Stand der Technik.

Gemäß der Erfindung wird ein Verfahren zur Verfügung gestellt, bei dem Verbesserungen hinsichtlich der Geometrie von in Schraubenverdichtern einzusetzenden Rotoren schon bei der Herstellung der Negativform berücksichtigt werden. Dazu wird zunächst ein die Form der gewundenen Zähne abbildender Meisterrotor durch Materialabtrag von einem Meisterrotor-Rohling hergestellt. Dieser Meisterrotor weist jedoch noch Bereiche auf, die nicht die für den fertigen Rotor gewünschte Geometrie aufweisen und daher eine Korrektur erfordern. Die entsprechende Korrekturbearbeitung könnte an dem Meisterrotor selbst durchgeführt werden. Gemäß dem erfindungsgemäßen Verfahren erfolgt sie jedoch dadurch, daß von dem Negativform-Rohling Material abgetragen wird, so daß in der Negativform Vertiefungen gebildet werden, die zur Erzeugung der komplementären Korrekturbereiche dienen. Wenn die korrigierte Negativform mit geeignetem Material für einen Rotor ausgefüllt wird, entstehen an dem Rotor entsprechend den Vertiefungen der Negativform erhabene Bereiche, die entsprechend der gewünschten Geometrie die Eigenschaften des Rotors verbessern.

Vorzugsweise wird der Negativform-Rohling zur Erzeugung des gewünschten Rotorprofils ausgedreht. Durch dieses Ausdrehen werden Formbereiche erzeugt, die bei der Herstellung des positiven Rotors Zylindermantelflächen bilden, die über die gesamte Länge des Rotors stetig verlaufen. Der stetige Verlauf stellt eine gute Abdichtung zwischen dem Haupt- und dem Nebenläufer sicher.

Nachfolgend wird die Erfindung anhand von Ausführungsbeispielen im Zusammenhang mit den Zeichnungen näher erläutert. Es zeigen:
- Fig. 1: einen gemäß dem erfindungsgemäßen Verfahren hergestellten Rotor, der mit einem entsprechenden zweiten Rotor ein Rotorpaar bildet und in einem Verdichtergehäuse angeordnet ist im Schnitt,
- Fig. 2: ein Rotorpaar gemäß dem Stand der Technik in einer Figur 1 entsprechenden Darstellung,
- Fig. 3: das Rotorpaar in Figur 2 in einer Ansicht von oben und mit einem weggebrochenen Bereich gemäß der Linie III-III in Fig. 2,
- Fig. 4a) bis c): einen Ausschnitt aus Figur 2 in vergrößerter Darstellung, wobei die Rotore verschiedene Rotationsstellungen einnehmen,
- Fig. 5a) bis 5c): Schnitte in den Figuren 4a) bis c) in schematischer Darstellung,
- Fig. 6a) bis c): einen Ausschnitt aus Figur 1 in vergrößerter Darstellung, wobei die Rotore verschiedene Rotationsstellungen einnehmen,
- Fig. 7: ein Blasloch, das von den Rotoren und dem Gehäuse in Figur 1 begrenzt wird,
- Fig. 8: ein Blasloch, das von den Rotoren und dem Gehäuse in Figur 2 begrenzt wird,
- Fig. 9: das Rotorpaar in Figur 1 in einer weiteren Eingriffsstellung der Rotore im Schnitt,
- Fig. 10: einen Ausschnitt aus Figur 9 in vergrößerter Darstellung,
- Fig. 11: einen Meisterrotor zur Herstellung eines der beiden Rotore in Figur 1,
- Fig. 12: einen Negativform-Rohling mit einer von dem Meisterrotor in Fig. 11 abgenommenen Geometrie,
- Fig. 13: eine durch Ausdrehen des Negativform-Rohlings in Fig. 12 hergestellte Negativform, und
- Fig. 14: einen mit der Negativform in Figur 13 hergestellten Rotor.

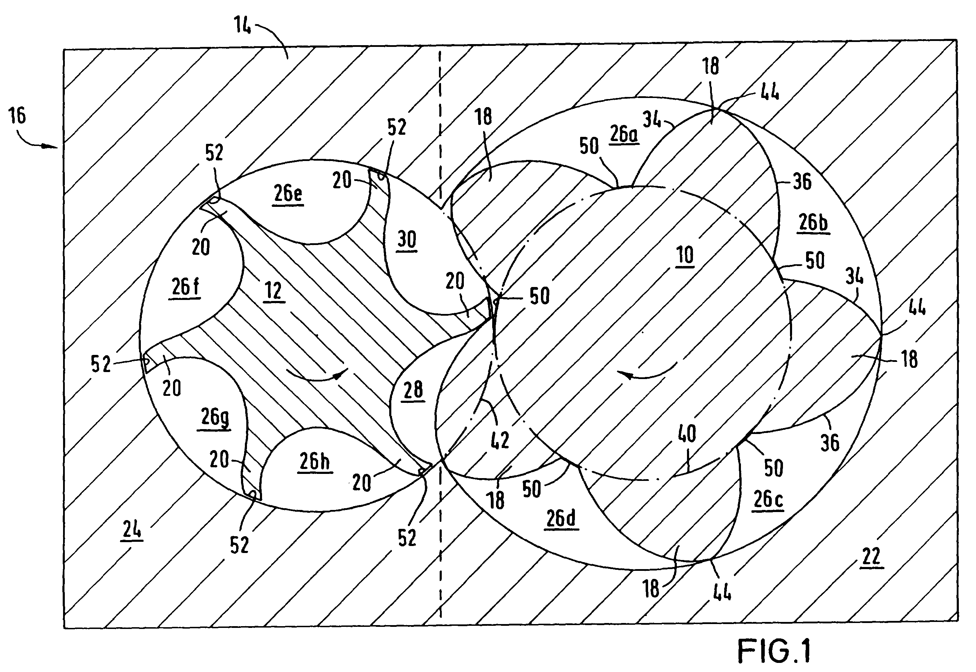

Figur 1 zeigt einen Schraubenverdichter 16 mit einen gemäß der Erfindung hergestellten Rotor 10, der ein Hauptläufer-Rotor ist und mit einem zweiten Rotor 12, der ein Nebenläufer-Rotor ist, in einem gemeinsamen Gehäuse 14 gelagert ist. Die beiden Rotore 10,12 kämmen in dem Gehäuse 14 miteinander, so daß Luft axial gefördert und verdichtet wird. Der Hauptläufer 10 weist fünf Zähne 18 auf, die an seinem Umfang gleichmäßig verteilt angeordnet sind und über die Länge des Hauptläufers 10 um etwa 240° verschraubt sind. Der mit dem Hauptläufer 10 kämmende Nebenläufer 12 besitzt sechs Zähne 20, die etwa um 180° über die Länge des Nebenläufers 12 verschraubt sind.

Die beiden Rotore 10,12 werden in dem Gehäuse 14 von einem ersten bzw. zweiten Gehäuseabschnitt 22,24 derart umgeben, daß Zahnflanken 34,36 der Zähne 18 des Hauptläufers 10 und Zahnflanken der Zähne 20 des Nebenläufers 12 mit dem ersten bzw. zweiten Gehäuseabschnitt 22,24 Verdrängungskammern 26a bis 26h definieren. Im Bereich vor dem Druckauslaß des Schraubenverdichters 16 definieren Zahnflanken 34,36 der Zähne 18 des Hauptläufers 10 und Zahnflanken der Zähne 20 des Nebenläufers 12 zwischen sich eine Ausschubkammer 28. Vor dem Einlaß ist ferner eine Ansaugkammer 30 definiert.

Der Wirkungsgrad des gezeigten Schraubenverdichters 16 hängt wesentlich von der Dichtigkeit der Verdränungskammern 26a bis 26h, der Ausschubkammer 28 und der Ansaugkammer 30 ab, wobei das Dichtverhalten der miteinander kämmenden Zähne 18,20 auf dem Wirkungsgrad des Schraubenverdichter 16 einen großen Einfluß hat.

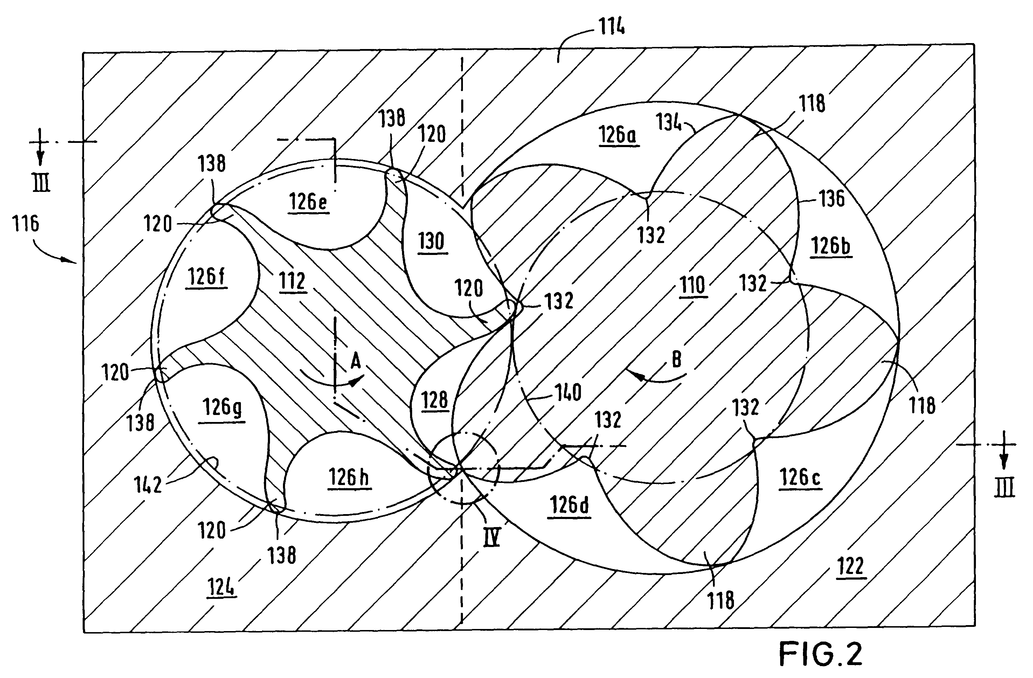

Zur Verdeutlichung der Dicht- und Strömungsverhältnisse ist in den Figuren 2 bis 5 und 8 ein Schraubenverdichter 116 gemäß dem Stand der Technik dargestellt. Der Schraubenverdichter 116 gemäß dem Stand der Technik unterscheidet sich von dem Schraubenverdichter 16 mit dem erfindungsgemäßen Rotor 10 durch wesentliche Details der Rotorgestaltung. Zum leichteren Verständnis sind Elemente des Schraubenverdichters 116, denen Elemente des Schraubenverdichters 16 entsprechen, mit Bezugszeichen versehen, deren Zahl gegenüber denen in Figur 1 um 100 erhöht ist.

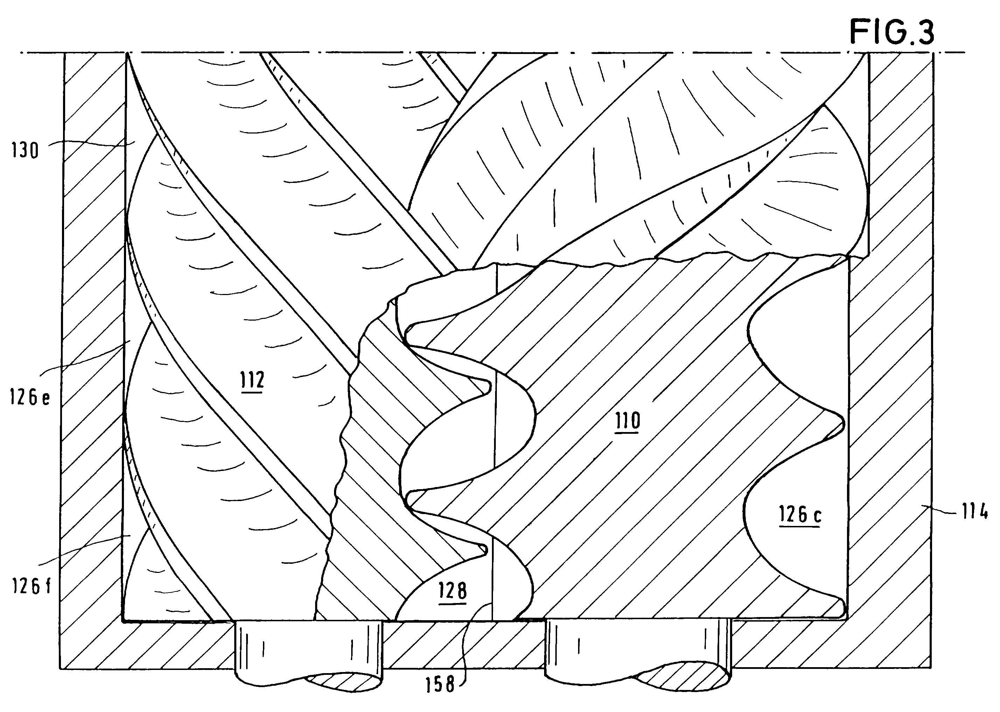

Die räumliche Gestaltung der Verdrängungskammern 126a bis 126h wird in Figur 3 verdeutlicht. Die Verdränungskammern 126a bis 126h werden von Zahnflanken 134,136 der Zähne 118,120 des Hauptläufers 110 bzw. des Nebenläufers 120 im Zusammenwirken mit dem jeweiligen Gehäuseabschnitt 122,124 definiert. Sie haben einen schraubenförmig gewundenen Verlauf und erstrecken sich zum Teil über die gesamte Länge der Rotore 110,112. Im Betrieb verändert sich durch die gegenläufige Rotation der Rotore 110,112 permanent das Volumen der einzelnen Kammern, wobei die Zahnflanken 134,136 im zyklischen Wechsel nacheinander Verdränungskammern 126a bis 126h, Ausschubkammern 128 und Ansaugkammern 130 begrenzen. Nacheinander werden jeweils zwei Verdränungskammern zu einer Ausschubkammer vereinigt, um nach dem Ausschieben des Druckgases sich erneut zu öffnen und eine Ansaugkammer zu bilden. Anschließend definieren die Zahnflanken zwei getrennte Verdrängungskammern.

Wenn zum Beispiel die Rotore 110,112 in Figur 2 gemäß den durch die Pfeile A und B angegebenen Drehrichtungen einige Winkelgrade verdreht werden, vereinigen sich die Verdrängungskammern 126d und 126h zu einer Ausschubkammer. Dabei wird gleichzeitig das Volumen der bestehenden Ausschubkammer 128 verringert, so daß das in der Ausschubkammer 128 eingeschlossene Gas mit erhöhtem Druck ausgeschoben wird. Gleichzeitig damit vergrößert sich das Volumen der Ansaugkammer 130, die sich bis zur Saugseite des Schraubenverdichters 116 erstreckt. Dabei wird zu verdichtendes Gas angesaugt.

Der in Figur 2 gezeigte Hauptläufer 110 ist spanend gefertigt und weist daher jeweils im Zahnfußbereich Ausrundungen 132 auf. Die Ausrundungen 132 sind erforderlich, um mit den Bearbeitungswerkzeugen die Zahnflanken 134,136 bearbeiten zu können. Damit beim Kämmen Hauptläufer 110 und Nebenläufer 112 abdichtend aneinander abwälzen weist der Nebenläufer 112 an jedem seiner Zähne 120 eine abgerundete Kuppe 138 auf, die beim Kämmen der beiden Rotore 110,112 in die jeweilige Ausrundung 132 des Hauptläufers 110 eingreift.

Die Ausrundungen des Hauptläufers liegen im Innern des Wälzkreises 140 des Hauptläufers 110. Dementsprechend befinden sich die Kuppen 138 des Nebenläufers 112 außerhalb des Wälzkreises 142 des Nebenläufers 112.

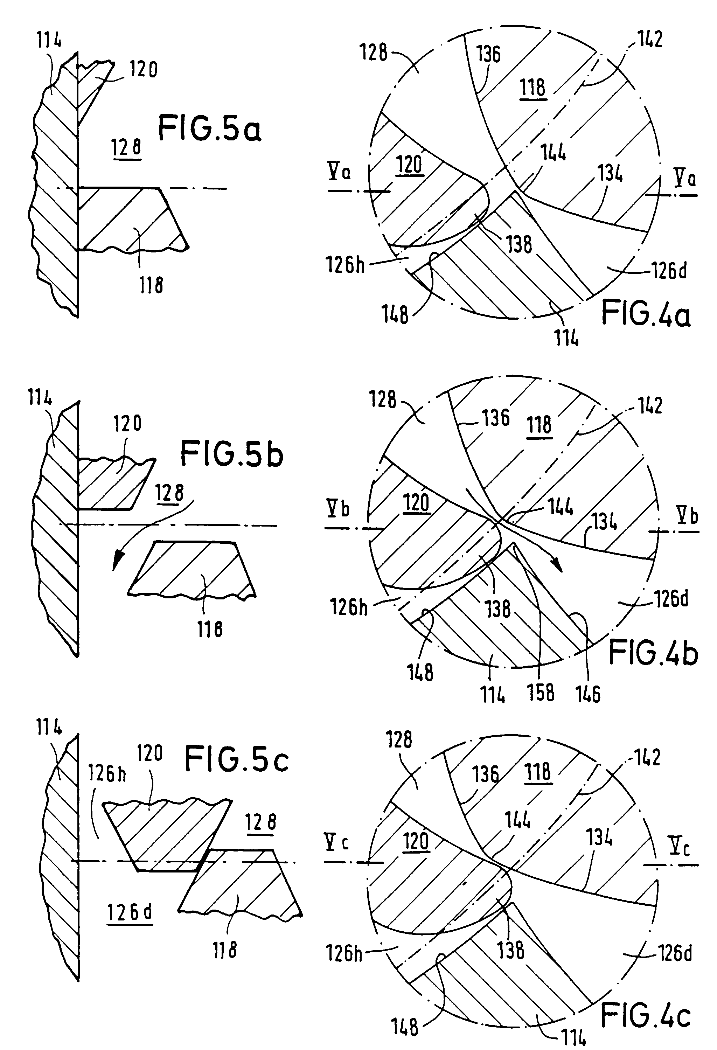

Die sich beim Kämmen der beiden Rotore 110,112 einstellenden Strömungsverhältnisse im Eingriffsbereich (Einzelheit IV in Figur 2) sind in Figur 4a bis 4c gezeigt, wobei die sich ergebenden Dicht- und Strömungsverhältnisse in den Figuren 5a bis 5c dargestellt sind.

Während der Rotationsbewegung der beiden Rotoren 110,112 laufen die Zähne 118 des Hauptläufers 110 mit einer die Zahnflanken 134,136 begrenzenden Scheitellinie 144 an einer Zylinderfläche 146 des ersten Gehäuseabschnitts 122 entlang. In entsprechender Weise laufen die Kuppen 138 der Zähne 120 des Nebenläufers 112 an einer zweiten Zylinderfläche 148 des zweiten Gehäuseabschnitts 124 entlang. Die Kuppen 138 und die Scheitellinien 144 bilden mit ihren jeweiligen Zylinderflächen 146,148 Abdichtungen. Dadurch sind die Verdrängungskammern 126d,146h und die Ausschubkammer 128 voneinander getrennt (Fign. 4a,5a). Wenn die Rotore jedoch weiter gedreht werden, stellt sich der in Figur 4b gezeigte Zustand ein, bei dem die Scheitellinie 144 des Zahns 118 des Hauptläufers 110 mit der Zylinderfläche 146 keine Abdichtung mehr bildet. Druckgas kann in dieser Rotationsstellung aus der Ausschubkammer 128 in die Verdrängungskammer 126 zurückströmen. Das Zurückströmen ist in Fig. 5b durch einen Pfeil dargestellt. Erst wenn die Rotore 110,112 bis in die in Figur 4c gezeigte Lage verdreht sind und der Zahn 120 des Nebenläufers 112 an dem Zahn 118 des Hauptläufers 110 zur Anlage gekommen ist, ist die aus den Verdrängungskammern gebildeste neue Ausschubkammer 128 abgedichtet.

Im Gegensatz zum Stand der Technik weist der Hauptläufer 10 gemäß der Erfindung (Figur 1) anstelle von Ausrundungen erste Zylindermantelflächen 50 auf, die auf dem Wälzkreis 40 des Hauptläufers 10 angeordnet sind. Dementsprechend weist der Nebenläufer 12 zweite Zylindermantelflächen 52 auf, die auf dem Wälzkreis 42 des Nebenläufers 12 angeordnet sind.

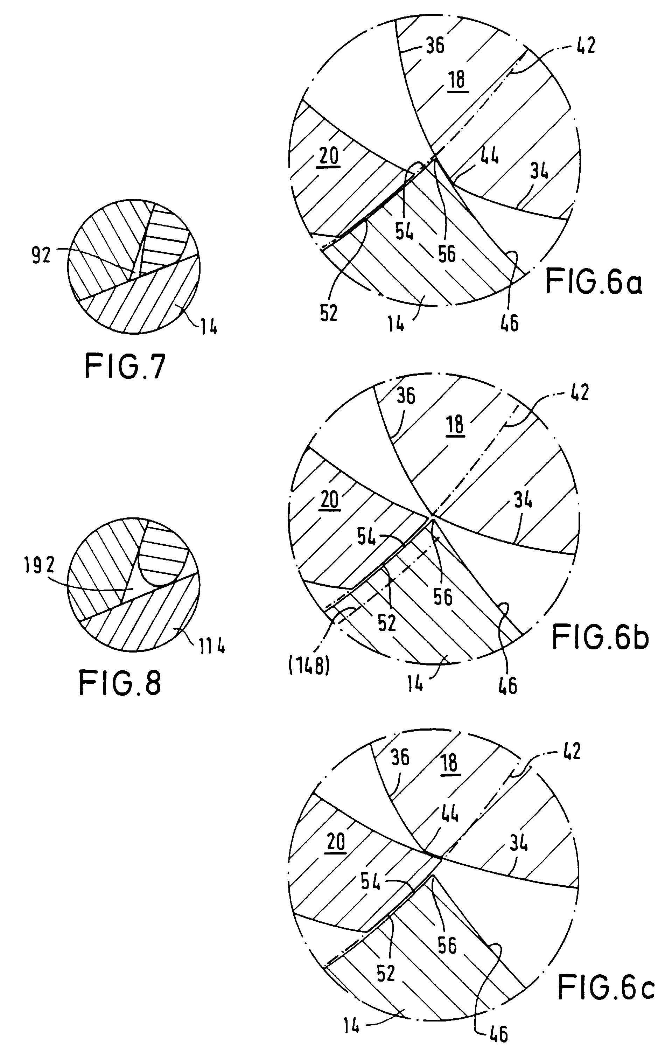

Die Strömungs- und Dichtverhältnisse, die sich bei Verwendung des erfindungsgemäßen Rotors ergeben, sind in den Figuren 6a-6c dargestellt. Um eine Abdichtung zwischen den Rotoren 10,12 und dem Gehäuse 14 zu erreichen, bilden die Zähne 18 des Hauptläufer-Rotors 10 mit einer Zylinderfläche 46 des Gehäuses 14 erste Abdichtungen, während die zweiten Zylindermantelflächen 52 der Zähne 20 des Nebenläufers 12 mit einer zweiten Zylinderfläche 54 des Gehäuses 14 zweite Abdichtungen bilden. Da der Nebenläufer 12 bei ansonsten unveränderten Wälzverhältnissen einen geringeren Durchmesser aufweist als der Nebenläufer 112 gemäß dem Stand der Technik liegt die von den Zylinderflächen 46 und 54 definierte Gehäusekante 56 näher an dem Punkt, an dem die Zähne 18,20 der beiden Rotore 10,12 in Eingriff kommen als die entsprechende Kante 158 beim Stand der Technik (Fig. 6b). Dies verringert die Größe des Blasloches.

Darüber hinaus kommen die Zähne 20 des Nebenläufers 12 ohne Verzögerung an den Zähnen 18 des Hauptläufers 10 in Eingriff, da der Nebenläufer 20 am Zahnkopf Abrundungen einer Kuppe nicht aufweist (Fig. 6c). Daher wird das sich beim Kämmen in jedem Schnitt kurzzeitig öffnende Blasloch erheblich früher wieder geschlossen als beim Stand der Technik.

Zum Vergleich der Größe der Blaslöcher können die Figuren 7 und 8 herangezogen werden. Figur 7 zeigt das Blasloch 92, das sich mit einem erfindungsgemäßen Rotor einstellt. Figur 8 zeigt das Blasloch 192, das sich bei Rotoren gemäß dem Stand der Technik öffnet. Da die Größe des Blaslochs maßgeblich ist für die sich einstellenden Rückströmverluste, läßt diese Gegenüberstellung deutlich erkennen, daß mit der Rotorgestaltung erhebliche Wirkungsgradverbesserungen eines Schraubenverdichters möglich sind.

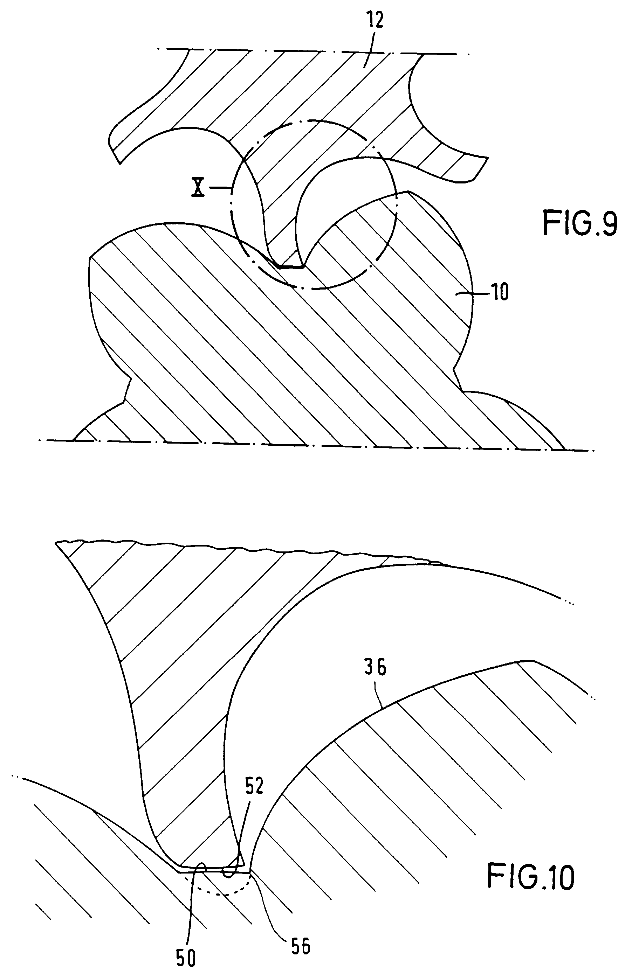

Die Figuren 9 und 10 zeigen die Rotore in Figur 1 in einer weiteren Verdrehstellung. Es ist deutlich erkennbar, daß die erste und zweite Zylindermantelfläche 50,52 auch beim Eingriff der beiden Rotore untereinander eine zuverlässige Abdichtung bilden. Beide Zylindermantelflächen 50,52 verlaufen stetig, so daß der zwischen Ihnen sich beim Abwälzen in benachbarten Schnitten bildende Spalt eine gleichbleibende Breite aufweist. Die stetige Zylindermantelfläche 50 definiert mit der Zahnflanke 36 eine Schraubenlinie 56, die eine scharfe Kante darstellt, durch die Strömungsverluste verringert werden.

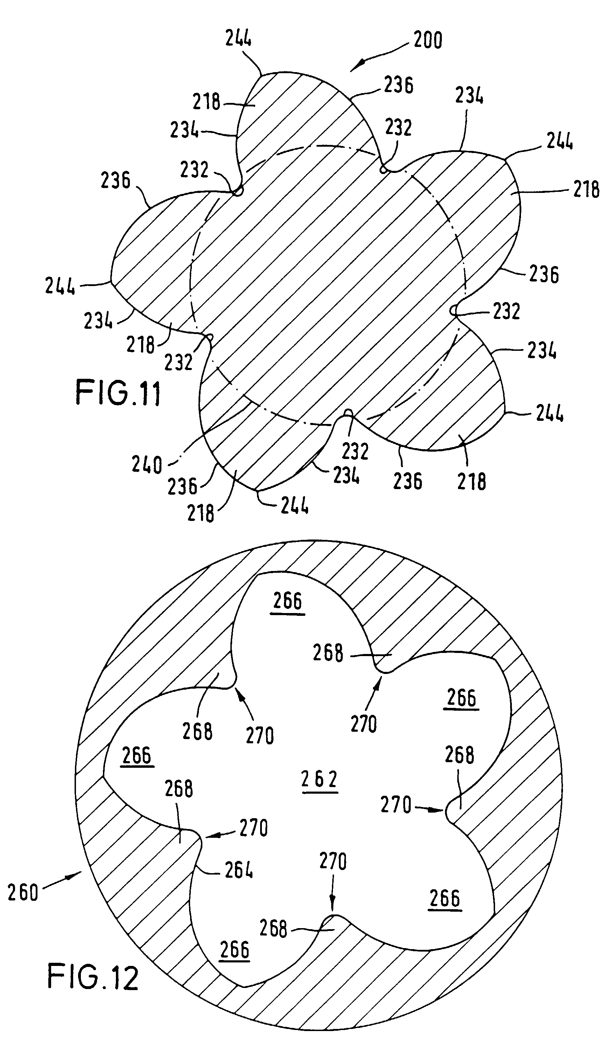

Die Figuren 11 bis 14 dienen der Erläuterung des Verfahrens zur Herstellung einer Negativform für den in Figur 1 gezeigten Rotors und der Erläuterung der Herstellung eines Rotors mit einer solchen Negativform.

Figur 11 zeigt einen Meisterrotor 200, der entsprechend dem mit ihm herzustellenden Hauptläufer fünf schraubenförmig gewundene Zähne 218 aufweist. Die Zahnflanken 234,236 weisen eine Kontur auf, die im Bereich zwischen einer von den Zahnflanken 234,236 gebildeten Scheitellinie 244 und dem Wälzkreis 240 des Meisterrotors 200 die gleiche Kontur aufweist wie die Zähne des erfindungsgemäßen Hauptläufers 10 und des Hauptläufers 110 gemäß dem Stand der Technik. Da der Meisterrotor 200 wie der Hauptläufer 110 gemäß dem Stand der Technik aus einem Meisterrotor-Rohling spanend hergestellt ist, weist er unterhalb des Wälzkreis 240 Ausrundungen 232 auf.

Ein so hergestellter Meisterrotor wird zunächst in einen Formkasten eingelegt und der zwischen dem Formkasten und dem Meisterrotor liegende Hohlraum wird einem geeigneten Formmaterial ausgefüllt, das anschließend ausgehärtet wird. Im ausgehärteten Zustand bildet das Formmaterial den Negativform-Rohling 260.

Nach dem Aushärten des Formmaterials wird der Meisterrotor aus dem Negativform-Rohling 260 herausgenommen, so daß ein Hohlraum 262 verbleibt. Die Kontur 264 des Hohlraums 262 weist schraubenförmig gewundene Vertiefungsbereiche 266 auf, deren Geometrie komplementär zur Geometrie der Zähne eines Hauptläufers ist. Zwischen den Vertiefungsbereichen 266 sind schraubenförmig gewundene Vorsprungsbereiche 268 angeordnet.

Der Negativform-Rohling 260 wird zur weiteren Bearbeitung in eine Drehbank eingespannt, in der Erhebungen darstellende Formkuppen 270 der Vorsprungsbereiche 268 durch Ausdrehen entfernt werden. Durch diese Bearbeitung erhält man eine Negativform 280, die hohlgeformte, schraubenförmig gewundene stetige Zylinderflächen 282 aufweist.

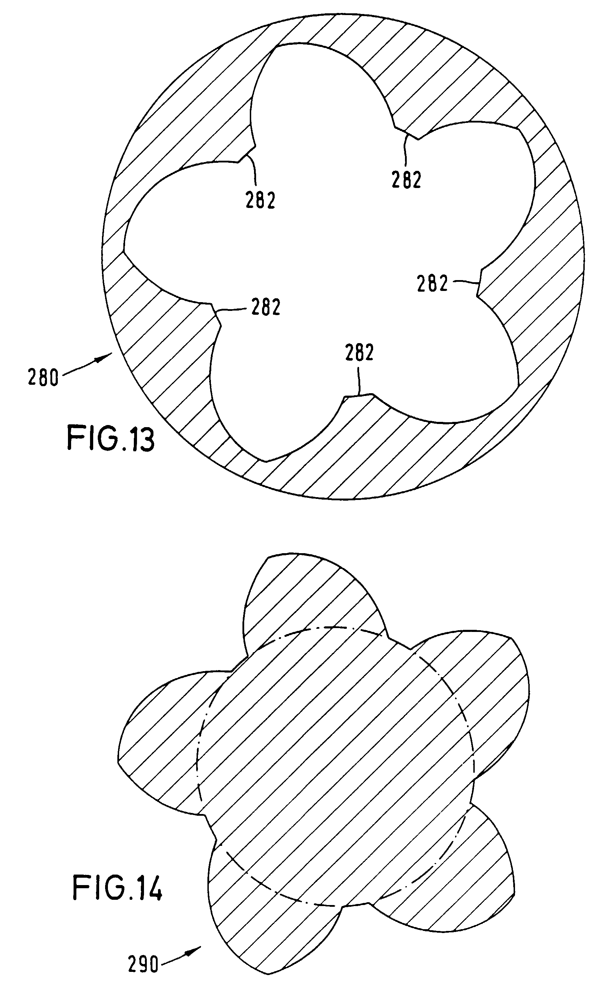

Durch Ausfüllen der in Figur 13 gezeigten Negativform mit einem geeigneten Rotormaterial und durch Aushärten desselben kann der in Figur 14 gezeigte Hauptläufer 290 hergestellt werden, dessen Geometrie mit der des Hauptläufers 10 in Figur 1 übereinstimmt.

## Patentansprüche

1. Verfahren zur Herstellung von Rotoren (10,290) von Schraubenverdichtern in einem Urformverfahren mit folgenden Schritten:
a) Herstellung eines die Form der gewundenen Zähne abbildenden Meisterrotors (200) durch Materialabtrag von einem Meisterrotor-Rohling,
b) Herstellung eines Negativform-Rohlings (260) durch Abnehmen der Form des Meisterrotors,
c) Abnehmen der Kontur der Negativform (280) durch Ausfüllen derselben mit losem Rotormaterial und Aushärten desselben, und
d) Ausformen des Rotors (290),
gekennzeichnet durch
nach der Herstellung des Negativform-Rohlings (260):
e) Herstellung einer Negativform (280) durch Abtrag von Material von dem Negativform-Rohling (260) zur Bildung von Vertiefungen zur Erzeugung von formkorrigierten Bereichen (282).

2. Verfahren nach Anspruch 1, dadurch gekennzeichnet, daß bei der Herstellung des Meisterrotors (200) erzeugte Ausrundungen (232) im Zahnfußbereich dadurch korrigiert werden, daß im Negativform-Rohling (260) Erhebungen (270), die durch die Ausrundungen (232) entstanden sind, abgetragen werden.

3. Verfahren nach Anspruch 2, dadurch gekennzeichnet, daß zur Korrektur des Profils des Negativform-Rohlings (260) der Negativform-Rohling (260) ausgedreht wird.

4. Verfahren zur Herstellung einer Negativform (280) eines in einem Schraubenverdichter einzusetzenden Rotors (10,290), der mehrere schraubenförmig gewundene Zähne (18) aufweist, mit folgenden Schritten:
a) Herstellung eines die Form der gewundenen Zähne abbildenden Meisterrotors (200) durch Materialabtrag von einem Meisterrotor-Rohling, und
b) Herstellung eines Negativform-Rohlings (260) durch Abnehmen der Form des Meisterrotors (200),
gekennzeichnet durch den Schritt
c) Abtrag von Material von dem Negativform-Rohling (260) zur Bildung von Vertiefungen zur Erzeugung von formkorrigierten Bereichen (282).

5. Rotor für einen Schraubenverdichter (16) mit einem urformend hergestellten Schraubenkörper, der mehrere schraubenförmig gewundene Zähne (18) aufweist, dadurch gekennzeichnet, daß im Zahnfußbereich zwischen den Zähnen (18) stetige Zylindermantelflächen (50) angeordnet sind, die jeweils mit mindestens einer Zahnflanke (34,36) mindestens eine Schraubenlinie (56) definieren.

6. Rotor nach Anspruch 5, dadurch gekennzeichnet, daß die stetigen Zylindermantelflächen (50) auf dem Wälzkreis (40) des Rotors (10) liegen.

7. Rotor nach Anspruch 5 oder 6, dadurch gekennzeichnet, daß die Zähne (18) im Querschnitt zwei konvexe Zahnflanken (34,36) aufweisen, die sich entlang einer schraubenförmigen Scheitellinie (44) berühren.

## Claims

1. A method for the production of rotors (10,290) for screw-type compressors using a master mold technique, comprising the following steps:
a) producing a master rotor (200) representing the shape of the winding teeth, by removal of material from a master rotor blank,
b) producing a negative mold blank (260) by taking the shape of the master rotor,
c) taking the contour of the negative mold (280) by filling the negative mold with loose rotor material and curing said material, and
d) shaping the rotor (290),
characterized by
subsequent to the production of the negative mold blank (260):
e) producing a negative mold (280) by removal of material from the negative mold blank (260) to create deepened portions provided to generate regions (282) with corrected shapes.

2. The method according to claim 1, characterized in that rounded portions (232) in the tooth-root regions generated during production of the master rotor (200), are corrected by the removal of protrusions (270) in the negative mold blank (260) which have been generated by said rounded portions (232).

3. The method according to claim 2, characterized in that corrections of the profile of the negative mold blank (260) are performed by an inside turning treatment performed on the negative mold blank (260).

4. A method for the production of a negative mold (280) for a rotor (10,290) to be inserted into a screw-type compressor and having a plurality of helically winding teeth (18), comprising the following steps:
a) producing a master rotor (200) representing the shape of the winding teeth, by removal of material from a master rotor blank, and
b) producing a negative mold blank (260) by taking the shape of the master rotor (200),
charactetized by the step of
c) removal of material from the negative mold blank (260) to create deepened portions provided to generate regions (282) with corrected shapes.

5. A rotor for a screw-type compressor (16) having a screw body produced by a master mold technique and comprising a plurality of helically winding teeth (18), characterized in that, in the tooth-root region between the teeth (18), continuous cylindrical outer surfaces (50) are arranged which respectively in combination with at least one tooth flank (34,36) define at least one helical line (56).

6. The rotor according to claim 5, characterized in that the continuous cylindrical outer surfaces (50) are arranged on the rolling circle (40) of the rotor (10).

7. The rotor according to claim 5 or 6, characterized in that the teeth (18), when viewed in cross section, comprise two convex tooth flanks (34,36) contacting each other along a helical peak line (44).

## Revendications

1. Procédé de fabrication de rotors (10, 290) pour compresseurs à vis selon un procédé à moule mère comprenant les étapes consistant à :
a) produire un rotor maître (200) épousant la forme de dents incurvées par enlèvement de matière à partir d'une ébauche de rotor maître,
b) produire une ébauche de moule négatif (260) en copiant la forme du rotor maître,
c) copier le contour du moule négatif (280) en le remplissant d'un matériau de rotor en vrac et en le durcissant, et
d) démouler le rotor (290),
caractérisé par l'étape consistant à,
suite à la production de l'ébauche de moule négatif (260) :
e) produire un moule négatif (280) par enlèvement de matière de l'ébauche de moule négatif (260) pour former des évidements afin de réaliser des zones (282) présentant une forme corrigée.

2. Procédé selon la revendication 1, caractérisé en ce que, lors de la production du rotor maître (200), les creux arrondis (232) produits dans la zone du pied de dent sont corrigés par le fait que, dans l'ébauche de moule négatif (260), les élévations (270) issues de la présence des creux arrondis (232) sont éliminées.

3. Procédé selon la revendication 2, caractérisé en ce que, pour corriger le profil de l'ébauche de moule négatif (260), l'ébauche de moule négatif (260) est alésée au tour.

4. Procédé de fabrication d'un moule négatif (280) d'un rotor (10, 290) à utiliser dans un compresseur à vis et présentant plusieurs dents (18) incurvées hélicoïdales, avec les étapes consistant à :
a) produire un rotor maître (200) reproduisant la forme des dents incurvées par enlèvement de matière d'une ébauche de rotor maître, et
b) produire une ébauche de moule négatif (260) en copiant la forme du rotor maître (200),
caractérisé par l'étape consistant à
c) enlever de la matière de l'ébauche de moule négatif (260) pour former des évidements afin de réaliser des zones (282) présentant une forme corrigée.

5. Rotor pour compresseur à vis (16) avec un corps d'hélice produit à l'aide d'un moule mère, présentant plusieurs dents (18) incurvées hélicoïdales, caractérisé en ce que, dans la zone de pied de dent, des surfaces latérales de cylindre continues (50) sont disposées entre les dents (18), lesdites surfaces définissant chacune au moins une hélice (56) avec au moins un flanc de dent (34, 36).

6. Rotor selon la revendication 5, caractérisé en ce que les surfaces latérales de cylindre continues (50) sont situées sur le cercle roulant (40) du rotor (10).

7. Rotor selon la revendication 5 ou 6, caractérisé en ce qu'en coupe transversale, les dents (18) présentent deux flancs de dent (34, 36) convexes, lesquels flancs se rencontrent le long d'une ligne de sommet (44) hélicoïdale.
